**Europäisches Patentamt**

**European Patent Office**

**Office européen des brevets**

(11) Veröffentlichungsnummer : **0 044 990**
**B1**

# EUROPÄISCHE PATENTSCHRIFT

(45) Veröffentlichungstag der Patentschrift :
18.01.84

(51) Int. Cl.³ : **C 25 D 5/02**, C 25 D 17/28

(21) Anmeldenummer : **81105436.0**

(22) Anmeldetag : **11.07.81**

(54) Vorrichtung zum partiellen galvanischen Beschichten.

(30) Priorität : **29.07.80 DE 3028635**

(43) Veröffentlichungstag der Anmeldung :
**03.02.82 Patentblatt 82/05**

(45) Bekanntmachung des Hinweises auf die Patenterteilung : **18.01.84 Patentblatt 84/03**

(84) Benannte Vertragsstaaten :
**CH DE FR GB IT LI NL**

(56) Entgegenhaltungen :
US-A- 3 657 097
US-A- 3 897 323
US-A- 3 966 581
US-A- 4 003 805

(73) Patentinhaber : **Degussa Aktiengesellschaft**
**Weissfrauenstrasse 9**
**D-6000 Frankfurt am Main 1 (DE)**

(72) Erfinder : **Seif, Rudolf, Dr. Dipl.-Ing**
**Im Rosenring 33**
**D-6454 Bruchköbel (DE)**
Erfinder : **Pfeifer, Alfred**
**Mühlkoeppelstrasse 13**
**D-6472 Altenstadt 1 (DE)**
Erfinder : **Holdt, Dietmar, Ing.grad**
**Staufenstrasse 19**
**D-7071 Leinzell (DE)**

Vorrichtung zum partiellen galvanischen Beschichten

Die Erfindung betrifft eine Vorrichtung zum partiellen galvanischen Beschichten von metallischen Einzelteilen, insbesondere von Stiften, Zungen und Bändern für elektrische Kontakte, durch partielles Eintauchen in eine Badflüssigkeit, im wesentlichen bestehend aus einer Elektrolytwanne, einer Transportkette zum Befestigen und Kontaktieren der zu beschichtenden Teile, einer Beschickungs- und einer Entnahmeeinrichtung.

Einzelteile, insbesondere Stifte für elektrische Kontakte, werden im allgemeinen partiell galvanisch beschichtet, insbesondere vergoldet, indem sie auf eine Transporteinrichtung aufgereiht, kontaktiert und in ein galvanisches Bad eingetaucht werden. Die galvanische Beschichtung erfolgt dabei bis zur Eintauchtiefe der Teile in das Bad. Zur rationellen Fertigung werden solche Stifte oft auf Kunststoffbändern zu sogenannten Stiftleisten aufgereiht.

Das Kernproblem bei diesen Verfahren zur partiellen Beschichtung besteht in der Kontaktierung der Werkstücke, besonders wenn im kontinuierlichen Betrieb beschichtet werden soll und infolge wirtschaftlicher Durchschleuszeiten mit maximalen Strömen und Badtemperaturen gearbeitet werden muß.

Aus der DE-OS 17 96 017 ist eine Galvanisiervorrichtung zur partiellen Beschichtung solcher Teile bekannt, bei der die Werkstücke an Kontaktier- und Transportwagen hängend durch das Bad geführt werden. Die Wagen werden mit Hilfe von Laufrollen in einer fest über der Elektrolytwanne angeordneten Kathodenschiene geführt, was allerdings nicht gewährleistet, daß eine genaue Eintauchtiefe der zu beschickenden Teile eingehalten werden kann. Außerdem treten Kontaktierungsschwierigkeiten auf.

In der DE-OS 24 60 694 werden Kontaktier- und Transportwägen mit Klemmstäben zur Aufnahme zweireihiger Stiftleisten beschrieben, die zur Bildung einer endlosen Transportkette über Scharniere gelenkig miteinander verbunden sind. Sie werden mit Hilfe von Rollen in einer Schiene geführt und über Kohlebürsten mit einer Kathodenschiene kontaktiert. Die Transportkette wird dabei mit Hilfe von zwei Polygonrädern angetrieben, die den Transportwägen angepasst sind. Auf dieser Vorrichtung lassen sich jedoch nur zweireihige Stiftleisten beschichten, nicht aber einreihige Stiftleisten, Zungen oder Bänder. Außerdem treten auch hier Kontaktierungsschwierigkeiten auf.

Es war daher Aufgabe der vorliegenden Erfindung, eine Vorrichtung zum partiellen galvanischen Beschichten von metallischen Einzelteilen, insbesondere von Stiften, Zungen und Bändern für elektrische Kontakte, durch partielles Eintauchen in eine Badflüssigkeit, im wesentlichen bestehend aus einer Elektrolytwanne, einer Transportkette zum Befestigen und Kontaktieren der zu beschichtenden Teile, einer Beschickungs-und einer Entnahmeeinrichtung zu schaffen, die eine gleichbleibende Eintauchtiefe der zu beschichtenden Teile in die Badflüssigkeit und eine sichere Kontaktierung gewährleistet.

Diese Aufgabe wurde erfindungsgemäß dadurch gelöst, daß die Transportkette aus einzelnen Halteelementen besteht, die über Bolzen gelenkig direkt aneinandergefügt sind und aus jeweils einer Kontaktlasche und einer Spannlasche bestehen, wobei die Spannlasche mittels Abstandshalter positioniert und mittels eines Federelementes an die Kontaktlasche angedrückt wird. Anhand der schematischen Abbildungen I bis IV soll die erfindungsgemäße Vorrichtung in beispielhafter Ausführungsform näher erläutert werden. Dabei zeigt Abbildung I einen Längsschnitt durch die Transportkette, Abbildung II einen Ausschnitt mit zwei Kettengliedern, Abbildung II einen Ausschnitt mit zwei Kettengliedern, Abbildung III einen Querschnitt durch ein Halteelement im geöffneten Zustand und Abbildung IV in geschlossenem Zustand.

Wesentlicher Teil der Vorrichtung ist die Transportkette (8), die aus einer Reihe von Halteelementen (1) besteht, die über Bolzen (7) gelenkig miteinander verbunden sind. Die Transportkette (8) wird über zwei Transportrollen (16, 17) geführt, die jeweils eine umlaufende Nut (19) besitzen und vorzugsweise zur Aufnahme der Bolzen (7) mit Zähnen (18) versehen sind. Die eine Flanke (20) der Nuten (19) ist konisch ausgebildet und bewirkt dadurch das Öffnen und Schließen der einzelnen Halteelemente (1). Mit der Achse der Transportrollen (16, 17) ist noch ein Kettenrahmen (12) verbunden, an dem vorteilhafterweise eine Kettenführung (9) angebracht ist, die die Bolzen (7) der Halteelemente (1) stützt und so ein Durchhängen der Transportkette (8) zuverlässig verhindert. In die Kettenführung (9) kann eine Kontaktschiene (10) eingelegt sein, die die Kontaktierung der Halteelemente (1) und damit der zu beschichtenden Einzelteile (15) bewirkt. Die Kontaktierung kann allerdings auch über die Transportrollen (16, 17) erfolgen.

Die einzelnen Halteelemente (1) bestehen jeweils aus einer Kontaktlasche (2) und einer Spannlasche (3), wobei die Spannlasche (3) mittels Abstandshalter (5), vorzugsweise Kugeln, auf der Kontaktlasche (2) positioniert und mittels eines Federelements (4) an diese gedrückt wird. Die Spannkraft der Federelements (4) kann vorteilhafterweise mittels einer Stellschranke (6) reguliert werden. Beim Einlaufen in die Transportrolle (16) wird die Spannlasche (3) durch die konische Flanke (20) der in der Rolle (16) befindlichen Nut (19) von der Kontaktlasche (2) abgehoben und kann die zu beschichtenden Teile (15), die über eine Beschickungseinrichtung (11) zugeführt werden, aufnehmen. Nach Verlassen der Transportrolle (16) wird die Spannlasche (3) durch das Federelement (4) wieder an die Kontaktlasche (2) angepresst, so daß die Teile (15) sicher gefasst und kontaktiert werden. Sie bewegen sich dann durch das Bad (13) zwischen den Anoden (14) hindurch und werden beim Einlaufen in die Nut (19) der Transportrolle (17) wieder freigegeben und abgeführt.

Das Greifende (21) der Kontakt (2)- und Spannlaschen (3) ist vorzugsweise rautenförmig ausgebildet, um auch Werkstücke kleiner Abmessungen sicher zu kontaktieren. Dadurch entsteht kein kurchgehender Stoß zwischen den Halteelementen (1) entlang der zu beschichtenden Teile (15). Bewährt hat sich ein Trapezwinkel von etwa 45°.

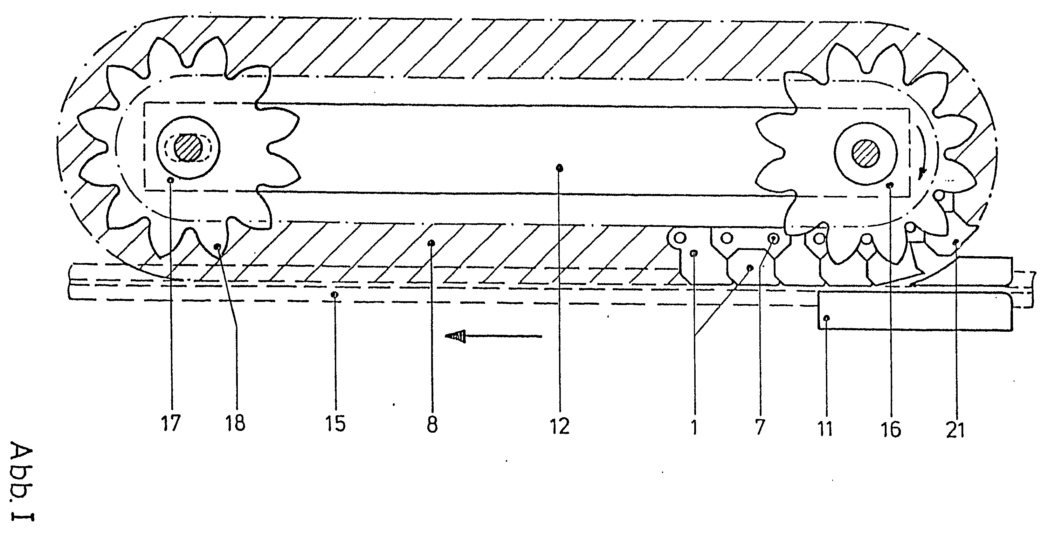

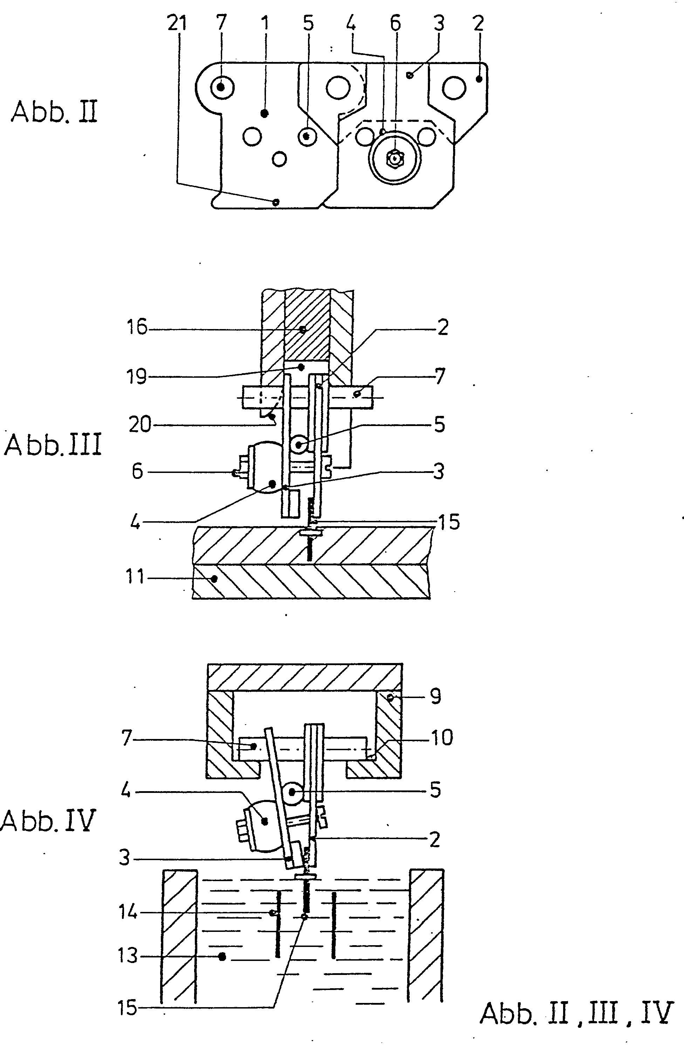

### Ansprüche

1. Vorrichtung zum partiellen galvanischen Beschichten von metallischen Einzelteilen, insbesondere von Stiften, Zungen und Bändern für elektrische Kontakte, durch partielles Eintauchen in eine Badflüssigkeit, im wesentlichen bestehend aus einer Elektrolytwanne, einer Transportkette zum Befestigen und Kontaktieren der zu beschichtenden Teile, einer Beschichtungs- und einer Entnahmeeinrichtung, dadurch gekennzeichnet, daß die Transportkette (8) aus einzelnen Halteelementen (1) besteht, die über Bolzen (7) gelenkig direkt aneinandergefügt sind und aus jeweils einer Kontaktlasche (2) und einer Spannlasche (3) bestehen, wobei die Spannlasche (3) mittels Abstandshalter (5) positioniert und mittels eines Federelements (4) an die Kontaktlasche (2) angedrückt wird.

2. Vorrichtung nach Anspruch 1, dadurch gekennzeichnet, daß als Abstandshalter (5) Kugeln Verwendung finden.

3. Vorrichtung nach Anspruch 1 und 2, dadurch gekennzeichnet, daß die Transportkette (8) über Rollen (16, 17) geführt wird, die mit umlaufenden Nuten (19) versehen sind, wobei jeweils eine Nutflanke (20) konisch ausgebildet ist.

4. Vorrichtung nach Anspruch 1 bis 3, dadurch gekennzeichnet, daß die Rollen (16, 17) zur Aufnahme der Bolzen (7) mit Zähnen (18) versehen sind.

5. Vorrichtung nach Anspruch 1 bis 4, dadurch gekennzeichnet, daß die Spannkraft des Federelements (4) mittels einer Stellschraube (6) reguliert werden kann.

6. Vorrichtung nach Anspruch 1 bis 5, dadurch gekennzeichnet, daß eine Kettenführung (9) angebracht ist.

7. Vorrichtung nach Anspruch 1 bis 6, dadurch gekennzeichnet, daß das Greifende (21) der Kontakt (2)- und Spannlaschen (3) rautenförmig ausgebildet ist.

### Claims

1. An apparatus for the partial galvanic coating of individual metallic parts, in particular pins, tongues and strips for electrical contacts, by partial immersion into a bath liquid, the apparatus essentially consisting of an electrolyte tank, a conveyor chain for attaching and contacting the parts to be coated, a coating device and a removal device, characterised in that the conveyor chain (8) consists of individual holding elements (1) which are directly joined together in a hinged manner by bolts (7) and each consist of a contact plate (2) and a clamping plate (3), the clamping plate (3) being positioned by spacers (5) and being pressed against the contact plate (2) by a spring element (4).

2. An apparatus according to claim 1, characterised in that balls are used as spacers (5).

3. An apparatus according to claims 1 and 2, characterised in that the conveyor chain (8) is guided over rollers (16, 17) which are provided with encircling grooves (19), one groove flank (20) being of a conical design in each case.

4. An apparatus according to claims 1 to 3, characterised in that the rollers (16, 17) are provided with teeth (18) to receive the bolts (7).

5. An apparatus according to claims 1 to 4, characterised in that the tension of the spring element (4) may be adjusted by an adjusting screw (6).

6. An apparatus according to claims 1 to 5, characterised in that a chain guide (9) is provided.

7. An apparatus according to claims 1 to 6, characterised in that the gripping end (21) of the contact plate (2) and of the clamping plate (3) is of a rhombic design.

### Revendications

1. Installation pour le revêtement partiel par électrolyse de pièces détachées métalliques, en particulier de broches, languettes et bande pour contacts électriques, au moyen d'une immersion partielle dans un bain liquide, constituée essentiellement d'une cuve à électrolyte, d'une chaîne transporteuse pour la fixation et la mise en contact des pièces à revêtir, d'un dispositif d'alimentation et de reprise, installation caractérisée en ce que la chaîne transporteuse (8) est constituée de différents éléments de fixation (1), qui sont réunis directement les uns aux autres, avec articulation, par des goujons (7), et qui sont constitués chacun par une bande de contact (2) et une bande de serrage (3), la bande de serrage (3) étant maintenue en place au moyen d'écarteurs (5) et étant serrée sur la bande de contact (2) au moyen d'un élément élastique (4).

2. Installation suivant la revendication 1, caractérisée en ce que, comme écarteurs (5), on utilise des billes.

3. Installation suivant l'une des revendications 1 et 2, caractérisée en ce que la chaîne transporteuse (8) est guidée sur des rouleaux (16, 17) qui sont pourvus de gorges périphériques (19), un des flancs de chaque gorge (20) étant réalisé en forme de cône.

4. Installation suivant l'une quelconque des revendications 1 à 3, caractérisée en ce que les rouleaux (16, 17) sont pourvus de dents (18) pour recevoir les goujons (7).

5. Installation suivant l'une quelconque des revendications 1 à 4, caractérisée en ce que la force de serrage de l'élément élastique (4) peut être réglée au moyen d'une vis de réglage (6).

6. Installation suivant l'une quelconque des revendications 1 à 5, caractérisée en ce que l'on monte un guidage de chaîne (9).

7. Installation suivant l'une quelconque des revendications 1 à 6, caractérisée en ce que l'extrémité de prise (21) des bandes de contact (2) et de serrage (3), sont réalisées en forme de losange.

Abb. I

**0 044 990**

Abb. II

Abb. III

Abb. IV

Abb. II, III, IV